# FASCICULE DE BREVET EUROPEEN

(11) **EP 1 679 445 B1**
(45) Date de publication et mention de la délivrance du brevet: **13.06.2007**
(21) Numéro de dépôt: 06075002.3
(22) Date de dépôt: 04.01.2006
(51) Int. Cl.: F16C 17/03, F16C 11/06, F16C 17/18

(54) **Organe de guidage d'une pièce mobile**
Führungselement für ein bewegbares Teil
Guiding member for a movable part

(30) Priorité: 06.01.2005 FR 0500097
(43) Date de publication de la demande: 12.07.2006
(73) Titulaire: SNECMA, 75015 Paris (FR)
(72) Inventeur: Bouru, Michel, 77950 Montereau Sur Le Jard (FR)
(74) Mandataire: Nguyen, Dominique

(56) Documents cités:
- DE-A1- 4 226 986
- GB-A- 499 928
- US-A- 3 390 926
- US-A- 3 902 771
- US-A- 3 920 293
- US-A- 4 664 595
- US-A- 5 800 068
- US-A- 6 024 494

## Description

La présente invention concerne un organe de guidage d'une pièce mobile, par exemple d'un arbre ou d'une tige cylindrique mobile en rotation et/ou en translation, ou encore d'une pièce rotulante.

Il est connu d'utiliser des bagues cylindriques pour assurer un positionnement précis d'un arbre tout en assurant son guidage en rotation ou en coulissement. Pour faciliter le mouvement tout en réduisant l'usure des surfaces de frottement, on utilise des matériaux présentant un faible coefficient de frottement et une bonne tenue à l'usure. Ces matériaux peuvent former la totalité des bagues ou être utilisés en couches minces déposées sur des supports assurant une tenue mécanique des couches minces.

Par exemple, il est connu d'utiliser des bagues en métal ou alliage métallique, tel qu'un alliage de bronze, avec dans certains cas un vernis de surface pour améliorer le glissement de l'arbre.

D'autres bagues, généralement utilisées à sec sans lubrifiant additionnel, sont réalisées d'une pièce en matériau plastique ou comprennent un support métallique ou chemise assurant la tenue mécanique, avec un revêtement des surfaces de guidage par un matériau à faible coefficient de frottement.

Dans certaines applications, ces bagues sont soumises à des contraintes sévères, par exemple de forte pression, de vitesse de glissement élevée ou de température élevée, avec souvent des vibrations ou des chocs transmis par l'arbre à guider, ce qui se traduit par une usure rapide et un risque de destruction de ces bagues.

Si l'on utilise des bagues métalliques pour réduire l'usure et augmenter la durée de vie, ce sont des problèmes de grippage que l'on constate à terme.

On a également proposé d'utiliser des bagues en céramique, ce matériau ayant une dureté importante et un coefficient de frottement relativement bas, par exemple de 0,3 environ ainsi qu'une très bonne résistance à de nombreux agents physiques ou chimiques.

De plus, ces bagues sont produites par frittage, ce qui permet de réaliser facilement des formes complexes. Elles ont toutefois l'inconvénient d'avoir une très forte raideur, une élasticité nulle et une fragilité aux chocs, ce qui pose des problèmes de tenue du fait que ces bagues ne se déforment pas et qu'en cas d'usure, les surfaces en contact se dégradent et un jeu de fonctionnement apparaît, qui peut conduire à la rupture des bagues.

Comme indiqué dans le document US 4 664 595 qui décrit un palier, il est aussi connu d'employer une bague métallique sur laquelle sont intégrés, sur la surface interne, des éléments en céramique. Le palier décrit dans ce document est formé par une douille en métal dur, un support de palier et des éléments en céramique montés dans le support. Seule la surface interne est équipée d'éléments en céramique.

Ces problèmes d'usure et de défaillance des bagues anti-friction peuvent avoir des conséquences notamment dans l'aéronautique où l'usure et la rupture d'un palier peuvent conduire à l'arrêt ou à la destruction d'un moteur.

La présente invention a notamment pour but d'apporter une solution simple et efficace à ces problèmes.

Elle a pour objet un organe de guidage à faible coefficient de frottement et très bonne tenue à l'usure, et possédant de plus une résilience lui permettant d'accepter une certaine déformation et de résister à des contraintes mécaniques élevées.

Elle propose à cet effet un organe de guidage creux d'une pièce mobile, comportant au moins une surface interne destinée à venir en contact de frottement et de glissement avec une surface complémentaire de la pièce mobile et une surface externe de frottement et de glissement, caractérisé en ce que les surfaces de contact de cet organe de guidage sont constituées d'éléments séparés en céramique portés par un support possédant des caractéristiques de résilience et d'amortissement.

Un avantage essentiel de l'organe de guidage suivant l'invention est qu'il combine une dureté importante de la surface de contact avec la pièce mobile et une certaine résilience qui lui permet d'accepter une déformation sans risque de rupture. De plus, la surface de contact est fractionnée et formée d'éléments séparés les uns des autres qui peuvent être de déformés de façon indépendante, de sorte que cette surface de contact peut subir sans inconvénients des contraintes locales différentes.

Dans un mode de réalisation préféré de l'invention, le support des éléments en céramique est en matériau élastiquement déformable et est avantageusement moulé ou surmoulé sur ces éléments.

Dans un autre mode de réalisation, le support est mis en forme avant le montage des éléments en céramique et est par exemple constitué d'une cage métallique ou analogue.

Dans les deux cas, les éléments en céramique peuvent posséder des formes saillantes pour leur fixation sur le support par sertissage ou clipsage.

Suivant une autre caractéristique de l'invention, le support des éléments en céramique est légèrement en retrait par rapport à la surface définie par ces éléments, ce qui évite au support de frotter sur la pièce mobile.

Les éléments en céramique peuvent être soit en contact à la fois avec la pièce mobile et avec un dispositif de support de cette pièce, ce qui permet de réduire le nombre d'éléments par exemple dans le cas d'un organe de guidage de faible dimension, soit en contact avec seulement la pièce mobile ou avec seulement le dispositif de support, ce qui assure une élasticité plus grande de l'organe de guidage.

L'organe de guidage suivant l'invention peut prendre des formes variées. Il peut constituer une douille cylindrique de révolution apte au guidage d'un arbre ou d'une tige cylindrique et comprendre soit des éléments en céramique s'étendant sur sensiblement toute la longueur de la douille en direction axiale, soit des éléments disposés successivement sur la longueur de la douille, ces éléments successifs pouvant être décalés angulairement les uns par rapport aux autres.

Dans une variante, la douille cylindrique comprend à l'une de ses extrémités une collerette formée par le support et pouvant comporter des éléments en céramique sur au moins une de ses faces.

L'organe de guidage suivant l'invention peut aussi être une rondelle comportant des plaquettes en céramique sur au moins une de ses faces, par exemple pour l'appui axial d'un arbre rotatif.

L'organe de guidage suivant l'invention peut encore être une rotule de guidage d'une pièce mobile suivant un mouvement rotulant, cette rotule comprenant des éléments en céramique définissant une surface sphérique.

Dans une variante de réalisation, l'organe de guidage comporte un manchon ou une chemise sur sa face opposée à celle définie par les éléments en céramique.

D'une manière générale, le support des éléments en céramique peut avantageusement contribuer à la réalisation d'une étanchéité avec la pièce mobile ou avec son dispositif de support, soit directement par coopération de formes, soit indirectement par l'intermédiaire d'un joint d'étanchéité.

Le support des éléments en céramique est par exemple un élastomère silicone du type RTV, qui résiste à des températures élevées de l'ordre de 300°C, un alliage métallique, un matériau composite, une résine polyamide, résistant aux températures élevées.

Une application intéressante de l'invention est une douille anti-friction de guidage en rotation d'une aube à calage angulaire variable d'un turboréacteur.

L'invention sera mieux comprise et d'autres caractéristiques et avantages apparaîtront plus clairement à la lecture de la description détaillée ci-après donnée à titre d'exemple et faite en référence aux dessins annexés dans lesquels :
- la figure 1 est une vue en perspective des éléments en céramique d'un organe de guidage selon l'invention ;
- la figure 2 est une vue en perspective de cet organe de guidage ;
- la figure 3 est une vue en coupe transversale de l'organe de guidage de la figure 2 ;
- les figures 4, 5 et 6 sont des vues semblables à celles des figures 1, 2 et 3, pour une variante de réalisation ;
- la figure 7 est une vue en perspective des éléments en céramique d'une autre variante ;
- la figure 8 est une vue en perspective du palier complet comprenant les éléments de la figure 7 ;
- la figure 9 est une vue en coupe transversale du palier de la figure 8 ;
- la figure 10 est une vue en coupe d'une variante du palier de la figure 9;
- la figure 11 est une vue en perspective d'une autre variante du palier de la figure 2 ;
- la figure 12 est une vue schématique en coupe des moyens d'entraînement d'une aube à calage variable dans un turboréacteur ;
- les figures 13 à 16 sont des vues en perspective des différents composants d'une rotule selon l'invention.

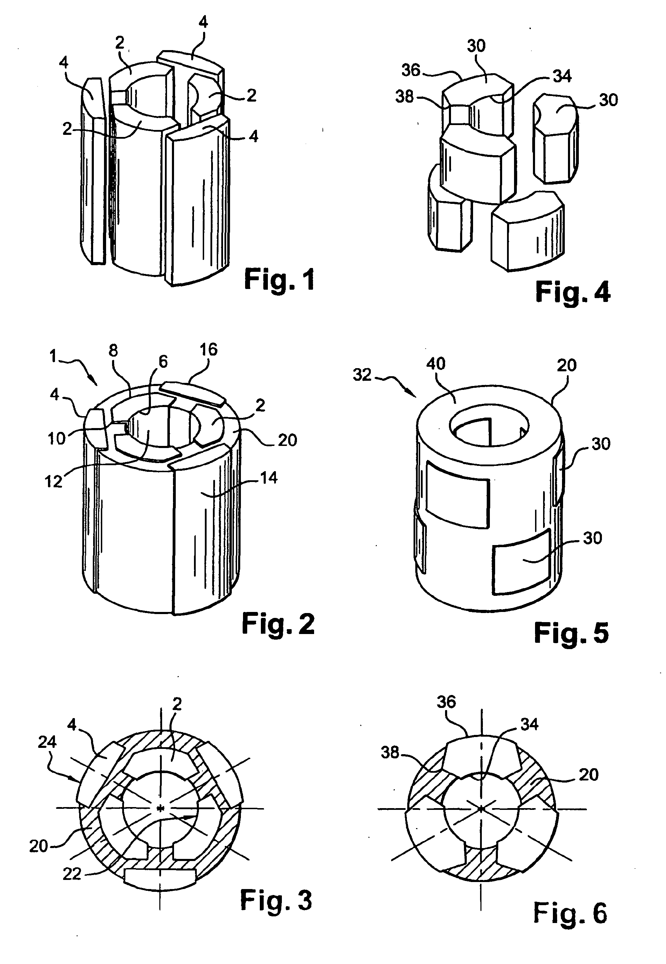

Dans le mode de réalisation représenté aux figures 1 à 3, l'organe de guidage suivant l'invention est un palier lisse 1 de guidage en rotation et/ou en translation d'un arbre ou d'une tige cylindrique. Il a une forme cylindrique de révolution comportant une surface interne de guidage de l'arbre. Ce palier comporte deux ensembles coaxiaux intérieur et extérieur, d'au moins trois éléments en céramique chacun, définissant une surface cylindrique interne de contact de frottement et de glissement et une surface cylindrique externe de contact de frottement et de glissement.

Un premier ensemble est constitué d'éléments internes 2, le deuxième ensemble est constitué d'éléments externes 4, formés par des plaquettes parallélépipédiques en céramique. Les plaquettes internes 2 sont à section transversale constante, définie par un arc de cercle intérieur 6 et un arc de cercle extérieur 8. Ces arcs ont un même centre situé sur l'axe du palier 1 et ils sont reliés entre eux à leurs extrémités par un côté incurvé formant un angle saillant 10. Ces plaquettes internes 2 sont réparties de manière régulière autour de l'axe du palier, à 120 degrés les unes des autres. Les rayons des arcs intérieurs 6 sont égaux et les surfaces internes 12 des plaquettes 2 définissent une surface cylindrique interne 22 de guidage d'un arbre (non représenté).

Les plaquettes externes 4 ont de la même manière une forme parallélépipédique allongée suivant l'axe du palier, avec une section constante comportant un arc de cercle extérieur 16. Ces plaquettes externes 4 sont réparties de manière régulière autour de l'axe du palier, à 120 degrés les unes des autres. Elles sont décalées transversalement de 60 degrés par rapport aux plaquettes internes 2. Les rayons des arcs extérieurs 16 sont égaux et les surfaces externes 14 des plaquettes 4 définissent une surface cylindrique externe 24 de guidage ou de fixation du palier 1 sur un dispositif de support non représenté.

Les plaquettes 2, 4 sont liées entre elles par un matériau de liaison 20 qui remplit tout le volume laissé libre, entre les surfaces cylindriques interne 22 et externe 24. Ce matériau de liaison est légèrement en retrait des surfaces cylindriques interne 22 et externe 24 du palier 18, ce retrait par exemple de quelques dixièmes de millimètre ayant pour effet de garantir que le matériau de liaison 20 n'entre pas en contact avec l'arbre à guider ou avec le dispositif de support.

Le matériau de liaison assure le positionnement et la liaison entre elles des différentes plaquettes 2 et 4, par adhésion du matériau de liaison 20 sur les plaquettes. Cette liaison peut aussi être complétée par un effet d'accrochage mécanique dans le cas où les plaquettes comportent des surfaces avec dépouille négative ou contre-dépouille, comme par exemple l'angle saillant 10, pour réaliser un ancrage ou un encastrement de ces plaquettes dans le matériau de liaison 20.

Différentes solutions peuvent être utilisées pour mettre en place le matériau de liaison. Une solution simple consiste à réaliser un surmoulage du matériau dans un moule dans lequel ont été positionnées les plaquettes. Le matériau de liaison 20 remplit tout l'espace libre du volume de moulage en assurant un bon contact avec les surfaces des plaquettes. Ce matériau peut être une matière thermoplastique, thermodurcissable ou polymérisant par réaction chimique. Pour assurer l'adhérence sur les plaquettes, différents moyens connus peuvent être utilisés, comme par exemple un traitement de surface des plaquettes améliorant l'accrochage du matériau de liaison. De plus, ce matériau est choisi pour présenter une certaine résilience ou élasticité et peut être en élastomère, par exemple en élastomère silicone du type RTV déjà utilisé en aéronautique et qui tient à des températures de l'ordre de 300°C, ou en une résine polyamide-imide.

Ce palier est utilisé de la façon suivante. Sa surface cylindrique interne 12 est ajustée sur la surface de l'arbre à guider, qui est en contact avec des surfaces dures en céramique assurant un guidage efficace avec un faible coefficient de frottement et une faible usure. La résilience du matériau de liaison 20 assurant le maintien des plaquettes apporte un avantage particulier. Ces plaquettes très rigides par elles-mêmes sont maintenues de manière légèrement souple par un matériau qui possède des qualités d'amortissement et d'absorption d'énergie. Ainsi, la surface interne de frottement du palier a une certaine aptitude à se conformer en suivant les défauts de géométrie résultant de l'usure des matériaux en contact, ce qui évite la formation de zones de forte pression que l'on pourrait constater dans le cas d'un organe de guidage rigide.

Le matériau de liaison 20 permet à la surface cylindrique interne 22 de se déformer localement par déplacement relatif des plaquettes, sans qu'il en résulte de fortes contraintes. De plus, cette résilience permet une absorption d'énergie ce qui peut être intéressant dans le cas où l'arbre guidé transmet des vibrations ou des à-coups.

Un autre avantage de ce palier est sa capacité d'adaptation au dispositif de maintien. Quand la surface cylindrique externe du palier est montée serrée dans un alésage, elle peut absorber des tolérances de fabrication sans générer de fortes contraintes.

La surface cylindrique externe du palier peut aussi servir de surface de guidage et de frottement, avec les mêmes caractéristiques et avantages que sa surface cylindrique interne. Il en est de même pour les faces d'extrémité axiales du palier qui peuvent servir au positionnement axial de l'arbre guidé. Le palier peut donc être fixé sur un dispositif de support ou laissé libre entre deux pièces en mouvement relatif.

Les figures 4 à 6 représentent une variante de réalisation du palier, dans laquelle d'une manière similaire, des plaquettes 30 en céramique tenues par un matériau de liaison 20 sont au nombre de six et ne sont pas décalées radialement mais circonférentiellement les unes par rapport aux autres.

Les plaquettes 30 ont chacune une longueur ou dimension axiale inférieure à la moitié de la longueur axiale du palier et sont réparties en deux étages superposés axialement, les plaquettes d'un étage étant décalées de 60° par rapport aux plaquettes de l'autre étage autour de l'axe du palier.

Chaque plaquette 30 a une forme allongée en portion de cylindre suivant l'axe du palier 32 et comporte une face cylindrique intérieure 34 et une face cylindrique extérieure 36, qui sont centrées sur l'axe du palier. Ces faces cylindriques sont reliées entre elles par des faces latérales en dièdre à angle saillant 38. Les faces intérieures 34 des plaquettes définissent une même surface cylindrique de révolution constituant la surface de guidage d'un arbre et les faces extérieures 36 de ces plaquettes définissent la surface externe cylindrique du palier.

Comme précédemment, les plaquettes sont portées et maintenues par un matériau de liaison 20 du type précité. En figure 5, les deux faces d'extrémités 40 du palier sont constituées uniquement par le matériau de liaison 20, à la différence du palier de la figure 2.

Un avantage de cette variante est de créer une étanchéité supplémentaire par une chicane due à la disposition angulairement décalée des plaquettes, entre les deux étages. Quand le palier sépare deux zones où règnent des pressions différentes, on peut s'attendre à un passage de fluide entre l'arbre et la surface cylindrique interne 22 du palier. Ce passage est plus facile dans le cas du palier de la figure 2, dont la surface 22 comporte des canaux rectilignes formés entre les plaquettes par le matériau de liaison légèrement en retrait, ces canaux étant parallèles à l'axe et s'étendant sur toute la longueur du palier. En figure 5, la disposition angulairement décalée des plaquettes dans les deux étages crée un effet de chicane obligeant le fluide à contourner l'obstacle et pouvant limiter son débit.

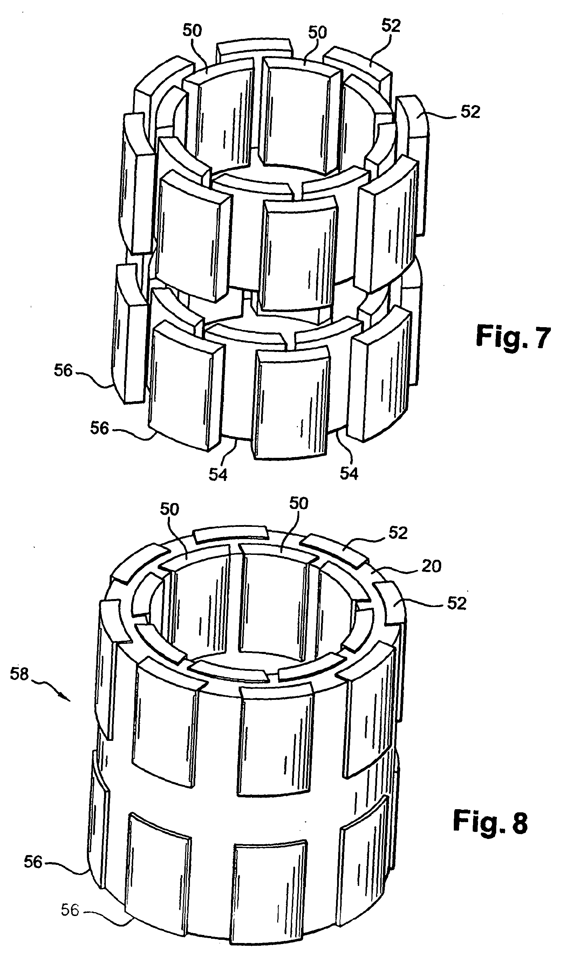

Une autre variante est représentée dans les figures 7 à 9 et correspond à une combinaison des deux réalisations précédentes. Le palier 58 de la figure 8 comprend deux étages de plaquettes superposés axialement comme en figure 5 et chacun de ces étages comprend lui-même un ensemble de plaquettes internes 50, 54 et un ensemble de plaquettes externes 52, 56, les plaquettes internes étant identiques entre elles, et les plaquettes externes étant identiques entre elles, les nombres de plaquettes internes et de plaquettes externes étant de huit, dans l'exemple représenté. Les faces internes des plaquettes internes 50, 54 et les faces externes des plaquettes externes 52, 56 forment respectivement une surface interne et une surface externe cylindriques de frottement ou de liaison avec une pièce mobile et avec un dispositif de support.

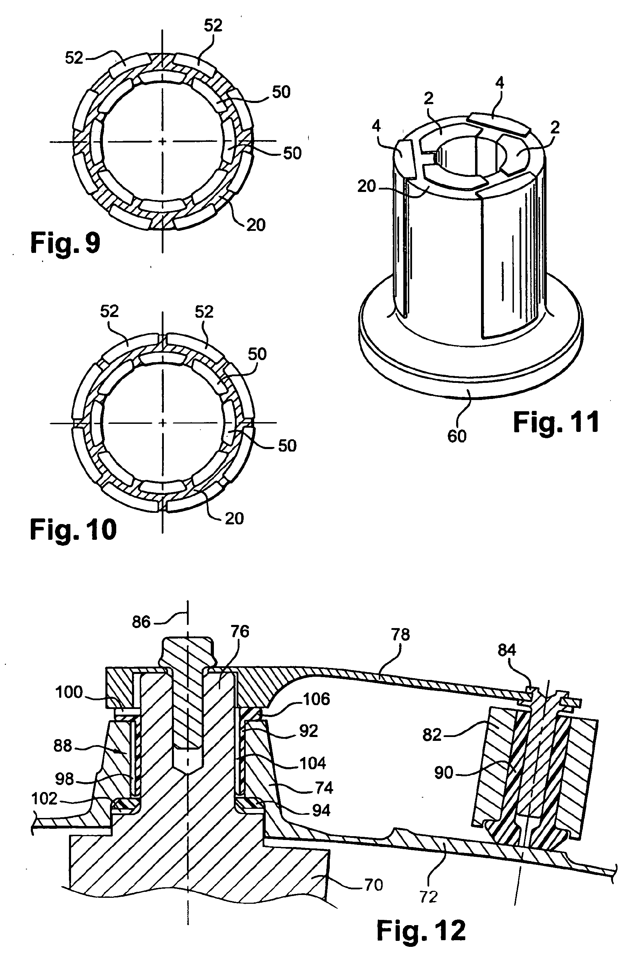

On voit sur la figure 9 que les faces latérales des plaquettes ont une forme en contre-dépouille pour l'ancrage mécanique des plaquettes dans le matériau de liaison.

Dans la variante de la figure 10, les plaquettes extérieures 52 ont une étendue angulaire supérieure à celle des plaquettes intérieures, ce qui augmente la part de la céramique dans la surface cylindrique externe du palier. Par ailleurs, les faces latérales de ces plaquettes sont planes et radiales et n'assurent pas d'accrochage mécanique dans le matériau de liaison, sauf par adhérence.

L'avantage des variantes des figures 7 à 10 est que les paliers possédant un plus grand nombre de plaquettes plus petites s'adaptent plus facilement à des déformations locales.

Ces variantes permettent aussi de réaliser des paliers de grande taille tout en conservant des plaquettes de petite taille. Les paliers des figures 1 à 6 ont par exemple un diamètre interne de l'ordre de 10mm tandis que ceux des figures 7 à 10 peuvent avoir un diamètre interne supérieur à 15mm.

La figure 11 représente une variante du palier des figures 1 à 3 qui comprend deux ensembles coaxiaux interne et externe respectivement de chacun trois plaquettes 2, 4, supportées par le matériau de liaison 20 qui forme en plus une collerette à une extrémité axiale du palier.

Cette collerette peut avoir plusieurs fonctions : elle peut servir de face d'appui fixée à un support du palier, sa plus grande surface facilitant la liaison. Elle peut aussi être garnie elle-même de plaquettes en céramique sur une face plane, plaquettes tenues de la même manière par adhésion ou par un effet d'accrochage mécanique sur le matériau de liaison. Elle peut aussi servir pour l'appui et le frottement d'un arbre rotatif guidé axialement, avec une grande surface pour réduire les pressions de contact.

Cette collerette peut également servir pour l'étanchéité. Dans le cas où le palier est fixé dans un logement cylindrique d'un support, on peut presser un élément d'étanchéité tel qu'un joint par la face de la collerette tournée vers le support, l'autre face plane de la collerette servant ou non de face de frottement.

D'autres moyens d'étanchéité peuvent être prévus sur le palier suivant l'invention, en utilisant par exemple le moulage de la matière de liaison pour lui donner des formes complexes servant à l'étanchéité par contact, en formant une chicane ou par l'intermédiaire d'un élément complémentaire tel qu'un joint fixe ou tournant.

La figure 12 représente un exemple d'utilisation d'un palier lisse selon l'invention, pour le montage pivotant d'une aube 70 à calage angulaire variable dans un turbo-réacteur. Ces aubes servent à redresser un écoulement gazeux à haute température, et sont soumises à des contraintes sévères (température élevée, compatibilité chimique avec les gaz, fortes charges). Le système doit rester totalement fiable pendant toute la durée d'utilisation entre deux révisions, sans jeu ni risque de rupture.

L'aube 70 est guidée dans une cheminée 74 d'un carter 72 par un palier 88 qui permet un mouvement de pivotement de l'aube 70 tout en assurant son calage axial. La position angulaire de l'aube 70 est commandée par une biellette 78 fixée de manière rigide sur la queue 76 de l'aube 70. L'autre extrémité de la biellette de commande 78 est entraînée par un anneau de commande 82 au moyen d'un doigt métallique 84 guidé dans une douille 90 montée sur l'anneau 82, celui-ci agissant simultanément sur différentes biellettes pour commander l'ensemble des aubes 70 d'au moins un étage de redressement.

Le palier 88 de guidage de la queue d'aube 76 comprend une douille 92 à collerette 106 correspondant à la réalisation de la figure 11 et une rondelle 94. La partie allongée axialement de la douille 92 est insérée dans un alésage de la cheminée 74 et comprend des plaquettes internes 104 et externes 98, portées par un matériau de liaison du type précité.

Le guidage axial de l'aube 70 par rapport au carter 72 est assuré avec un faible frottement et une bonne fiabilité par la collerette 106 de la douille 92 et par la rondelle 94. La collerette 106 comprend des plaquettes en céramique 100 formant une surface plane annulaire en appui sur la biellette de commande 78 et assurant le frottement avec celle-ci. La rondelle 94 comprend aussi des plaquettes en céramique 102 formant une surface plane annulaire en appui sur un épaulement formé à la jonction entre la queue 76 et l'aube 70. Ce guidage axial est monté avec un jeu fonctionnel axial réduit ou avec une légère précontrainte axiale. Ce guidage est, comme le guidage en rotation, soumis à des pressions et des chocs. L'utilisation de plaquettes céramiques montées sur un matériau résilient est donc tout à fait appropriée.

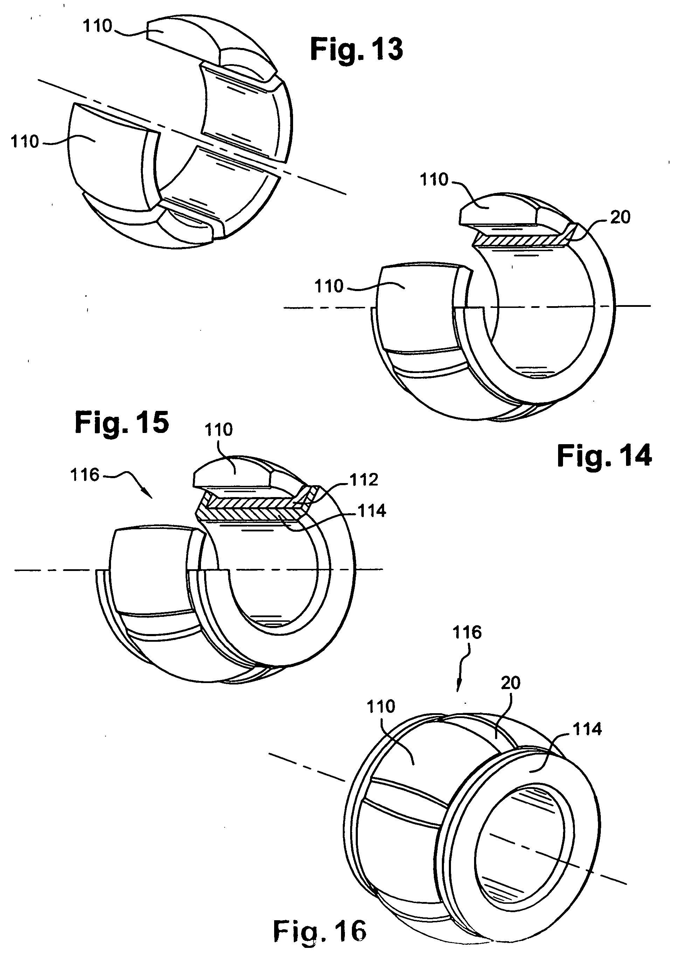

Les figures 13 à 16 représentent une variante de réalisation relative à une rotule ayant une surface de guidage sphérique. Cette rotule comprend une série de plaquettes en céramique 110 identiques, avec une répartition angulaire régulière autour d'un axe et un jeu circonférentiel entre elles. Les faces intérieures de ces plaquettes 110 définissent une surface cylindrique et leurs faces extérieures définissent une surface en segment de sphère. Ces plaquettes ont chacune deux faces latérales planes entre leurs faces sphériques et cylindriques.

Ces plaquettes sont portées et liées entre elles par le matériau de liaison 20. Celui-ci assure par adhérence la tenue des plaquettes ainsi que la liaison avec une chemise métallique interne 114, qui est de forme cylindrique de révolution et comporte deux collerettes à ses extrémités axiales. Le matériau de liaison remplit un espace cylindrique 112 laissé libre entre la chemise 114 et les plaquettes 110, les jeux circonférentiels entre les plaquettes et les espaces annulaires plats situés entre les extrémités axiales des plaquettes et les collerettes. Cette matière est mise en place par exemple par surmoulage sur les plaquettes et la chemise disposées au préalable dans un moule. Comme pour les réalisations précédentes, un léger retrait de la surface de la matière de liaison par rapport aux surfaces extérieures des plaquettes est prévu pour garantir que la pièce à guider est en appui exclusivement sur les plaquettes.

D'une manière générale, un organe de guidage suivant l'invention est constitué de plaquettes en céramique séparées les unes des autres et portées par un matériau présentant une certaine résilience et une capacité d'amortissement. On peut selon l'invention utiliser tout matériau de liaison possédant les qualités voulues de résilience et d'amortissement, par exemple un alliage métallique, un composite, une résine polyamide, un élastomère ou autre. On peut utiliser en variante une cage de support formée d'une tôle métallique et comportant des moyens d'accrochage des plaquettes, par exemple des crochets de clipsage, et des formes assurant une élasticité relative entre le support et les plaquettes, par exemple des plis de la tôle.

Par ailleurs, les plaquettes décrites ci-dessus ont des surfaces de frottement à contour globalement rectangulaire, mais pourraient avoir des contours différents, par exemple arrondis.

## Revendications

1. - Organe de guidage creux d'une pièce mobile, comportant au moins une surface interne (12,) de frottement et de glissement et une surface externe (14) de frottement et de glissement, **caractérisé en ce que** lesdites surfaces (12, 14) de l'organe de guidage sont constituées d'éléments séparés en céramique (2, 4, 30) portés par un support (20).

2. - Organe de guidage suivant la revendication 1 **caractérisé en ce que** ledit support est en matériau élastiquement déformable moulé ou surmoulé sur les éléments en céramique (2, 4, 30).

3. - Organe de guidage suivant la revendication 1, **caractérisé en ce que** le support est mis en forme avant le montage des éléments en céramique (2, 4, 30).

4. Organe de guidage suivant la revendication 2 ou 3, **caractérisé en ce que** les éléments en céramique (2, 4, 30) possèdent des formes saillantes (38) pour leur fixation sur le support (20) par sertissage ou clipsage.

5. Organe de guidage suivant l'une des revendications précédentes, **caractérisé en ce que** le support (20) est légèrement en retrait par rapport à la surface de contact définie par les éléments en céramique (2, 4, 30).

6. - Organe de guidage suivant l'une des revendications précédentes, **caractérisé en ce que** certains au moins des éléments en céramique (30) définissent la surface interne de contact et la surface externe de contact.

7. - Organe de guidage suivant l'une quelconque des revendications 1 à 5, **caractérisé en ce qu'**il comporte des premiers éléments en céramique (2) définissant la surface interne de contact avec la pièce mobile et des seconds éléments en céramique (4) définissant la surface externe de contact.

8. - Organe de guidage suivant l'une des revendications 1 à 5, **caractérisé en ce que** le support des éléments en céramique comprend une chemise rigide (114), par exemple métallique, sur sa face opposée à la surface de contact définie par les éléments en céramique (110).

9. - Organe de guidage suivant l'une quelconque des revendications précédentes, **caractérisé en ce que** le support (20) des éléments en céramique est constitué d'un élastomère, par exemple d'un élastomère silicone, d'un alliage métallique, d'un matériau composite, ou une résine polyamide résistant aux températures élevées.

10. Organe de guidage suivant l'une des revendications précédentes, **caractérisé en ce que** les éléments en céramique sont des plaquettes ou des blocs parallélépipédiques à faces planes et/ou incurvées.

11. - Organe de guidage suivant l'une quelconque des revendications précédentes, **caractérisé en ce qu'**il forme une douille cylindrique de révolution (18, 32, 58) apte au guidage d'un arbre ou d'une tige cylindrique.

12. Organe de guidage suivant l'une des revendications 1 à 11, **caractérisé en ce que** lesdits éléments en céramique (2, 4) s'étendent sur sensiblement toute la longueur de l'organe de guidage.

13. - Organe de guidage suivant l'une des revendications 1 à 11, **caractérisé en ce qu'**il comprend des éléments en céramique (30, 50, 52) disposés successivement sur la longueur de l'organe de guidage, ces éléments disposés successivement pouvant être décalés angulairement les uns par rapport aux autres.

14. - Organe de guidage suivant l'une quelconque des revendications 11 à 13, **caractérisé en ce qu'**il comprend à l'une de ses extrémités une collerette (60, 92) formée par le support (20).

15. Organe de guidage suivant la revendication 14, **caractérisé en ce que** la collerette (60, 92) comporte des éléments en céramique (100) sur au moins une de ses faces.

16. - Organe de guidage suivant l'une quelconque des revendications 1 à 10, **caractérisé en ce qu'**il forme une rondelle (94) comportant des éléments en céramique (102) sur au moins une de ses faces.

17. - Organe de guidage suivant l'une quelconque des revendications précédentes, **caractérisé en ce que** le support (20) des éléments en céramique réalise également une étanchéité en particulier axiale avec la pièce mobile ou avec son dispositif de support, soit directement par coopération de formes, soit indirectement par l'intermédiaire d'un joint d'étanchéité.

18. - Organe de guidage suivant l'une quelconque des revendications précédentes, **caractérisé en ce qu'**il constitue un palier de guidage (88) en rotation d'une aube (70) à calage angulaire variable d'un turboréacteur.

19. Organe de guidage suivant l'une quelconque des revendications 1 à 10, 12 et 13, **caractérisé en ce qu'**il forme une rotule (116) pour le guidage d'une pièce en mouvement rotulant, ce guidage étant assuré par des éléments en céramique (110) définissant une surface sphérique.

## Claims

1. - Hollow member for the guidance of a movable part, comprising at least one friction and sliding inner surface (12) and one friction and sliding outer surface (14), **characterized in that** the said surfaces (12, 14) of the guidance member consist of separate ceramic elements (2, 4, 30) carried by a support (20).

2. - Guidance member according to Claim 1, **characterized in that** the said support is made of elastically deformable material moulded or overmoulded onto the ceramic elements (2, 4, 30).

3. - Guidance member according to Claim 1, **characterized in that** the support is formed before the ceramic elements (2, 4, 30) are mounted.

4. - Guidance member according to Claim 2 or 3, **characterized in that** the ceramic elements (2, 4, 30) have protruding shapes (38) for attaching them to the support (20) by crimping or clipping.

5. - Guidance member according to one of the preceding claims, **characterized in that** the support (20) is slightly recessed relative to the contact surface defined by the ceramic elements (2, 4, 30).

6. - Guidance member according to one of the preceding claims, **characterized in that** at least some of the ceramic elements (30) define the inner contact surface and the outer contact surface.

7. - Guidance member according to any one of Claims 1 to 5, **characterized in that** it comprises first ceramic elements (2) defining the inner surface of contact with the movable part and second ceramic elements (4) defining the outer contact surface.

8. - Guidance member according to one of Claims 1 to 5, **characterized in that** the support of the ceramic elements comprises a rigid sleeve (114), metallic for example, on its face opposite to the contact surface defined by the ceramic elements (110).

9. - Guidance member according to any one of the preceding claims, **characterized in that** the support (20) of the ceramic elements consists of an elastomer, for example a silicone elastomer, a metal alloy, a composite material, or a high-temperature-resistant polyamide resin.

10. - Guidance member according to one of the preceding claims, **characterized in that** the ceramic elements are plates or parallelepipedal blocks with flat and/or curved faces.

11. - Guidance member according to any one of the preceding claims, **characterized in that** it forms an axisymmetric cylindrical tubular casing (18, 32, 58) capable of guiding a cylindrical rod or shaft.

12. - Guidance member according to any one of Claims 1 to 11, **characterized in that** the said ceramic elements (2, 4) extend over substantially the whole length of the guidance member.

13. - Guidance member according to one of Claims 1 to 11, **characterized in that** it comprises ceramic elements (30, 50, 52) placed successively over the length of the guidance member, these successively placed elements being able to be offset angularly relative to one another.

14. - Guidance member according to any one of Claims 11 to 13, **characterized in that** it comprises, at one of its ends, a collar (60, 92) formed by the support (20).

15. - Guidance member according to Claim 14, **characterized in that** the collar (60, 92) comprises ceramic elements (100) on at least one of its faces.

16. - Guidance member according to any one of Claims 1 to 10, **characterized in that** it forms a washer (94) comprising ceramic elements (102) on at least one of its faces.

17. - Guidance member according to any one of the preceding claims, **characterized in that** the support (20) of the ceramic elements also forms a seal, in particular an axial seal, with the movable part or with its supporting device, either directly by cooperation of shapes, or indirectly via a seal.

18. - Guidance member according to any one of the preceding claims, **characterized in that** it forms a bearing (88) for rotational guiding a variable-pitch vane (70) of a turbojet.

19. - Guidance member according to any one of Claims 1 to 10, 12 and 13, **characterized in that** it forms a ball joint (116) for the guidance of a swivel-motion part, this guidance being provided by ceramic elements (110) defining a spherical surface.

## Patentansprüche

1. Hohles Führungsorgan für ein bewegbares Teil, das mindestens eine Reib- und Gleitinnenfläche (12) und eine Reib- und Gleitaußenfläche (14) aufweist,
**dadurch gekennzeichnet,**
**dass** diese Flächen (12, 14) des Führungsorgans von einzelnen Keramikelementen (2, 4, 30) gebildet werden, die an einer Halterung (20) sitzen.

2. Führungsorgan nach Anspruch 1,
**dadurch gekennzeichnet,**
**dass** diese Halterung aus elastisch verformbarem Werkstoff besteht, der an den Keramikelementen (2, 4, 30) geformt oder überformt ist.

3. Führungsorgan nach Anspruch 1,
**dadurch gekennzeichnet,**
**dass** die Halterung vor dem Einbau der Keramikelemente (2, 4, 30) geformt wird.

4. Führungsorgan nach Anspruch 2 oder 3,
**dadurch gekennzeichnet,**
**dass** die Keramikelemente (2, 4, 30) zu ihrer Befestigung an der Halterung (20) durch eine Quetsch- oder Schnappverbindung mit Vorsprüngen (38) geformt sind.

5. Führungsorgan nach einem der vorherigen Ansprüche,
**dadurch gekennzeichnet,**
**dass** die Halterung (20) gegenüber der von den Keramikelementen (2, 4, 30) gebildeten Kontaktfläche leicht zurückspringt.

6. Führungsorgan nach einem der vorherigen Ansprüche,
**dadurch gekennzeichnet,**
**dass** zumindest einige der Keramikelemente (30) die innere Kontaktfläche und die äußere Kontaktfläche bilden.

7. Führungsorgan nach einem der Ansprüche 1 bis 5,
**dadurch gekennzeichnet,**
**dass** es erste Keramikelemente (2) enthält, die die innere Kontaktfläche zu dem bewegbaren Teil bilden, sowie zweite Keramikelemente (4) enthält, die die äußere Kontaktfläche bilden.

8. Führungsorgan nach einem der Ansprüche 1 bis 5,
**dadurch gekennzeichnet,**
**dass** die Halterung der Keramikelemente an ihrer zu der von den Keramikelementen (110) gebildeten Kontaktseite abgewandten Seite einen starren Mantel (114) aufweist, der beispielsweise aus Metall besteht.

9. Führungsorgan nach einem der vorherigen Ansprüche,
**dadurch gekennzeichnet,**
**dass** die Halterung (20) der Keramikelemente aus einem Elastomer, beispielsweise aus einem Silikonelastomer, einer Metalllegierung, einem Verbundwerkstoff oder einem Polyamidharz gebildet ist, welche gegen hohe Temperaturen beständig sind.

10. Führungsorgan nach einem der vorherigen Ansprüche,
**dadurch gekennzeichnet,**
**dass** die Keramikelemente Plättchen oder quaderförmige Blöcke mit ebenen und/oder gekrümmten Seiten sind.

11. Führungsorgan nach einem der vorherigen Ansprüche,
**dadurch gekennzeichnet,**
**dass** es eine zylindrische, umlaufende Hülse (18, 32, 58) bildet, die zur Führung einer Welle oder einer zylindrischen Stange geeignet ist.

12. Führungsorgan nach einem der Ansprüche 1 bis 11,
**dadurch gekennzeichnet,**
**dass** sich diese Keramikelemente (2, 4) im Wesentlichen über die gesamte Länge des Führungsorgans erstrecken.

13. Führungsorgan nach einem der Ansprüche 1 bis 11,
**dadurch gekennzeichnet,**
**dass** es Keramikelemente (30, 50, 52) umfasst, die hintereinander auf der Länge des Führungsorgans angeordnet sind, wobei diese hintereinander angeordneten Elemente im Winkel zueinander versetzt angeordnet sein können.

14. Führungsorgan nach einem der Ansprüche 11 bis 13,
**dadurch gekennzeichnet,**
**dass** es an einem seiner Enden einen Flansch (60, 92) aufweist, der von der Halterung (20) gebildet wird.

15. Führungsorgan nach Anspruch 14,
**dadurch gekennzeichnet,**
**dass** der Flansch (60, 92) an mindestens einer seiner Seiten Keramikelemente (100) enthält.

16. Führungsorgan nach einem der Ansprüche 1 bis 10,
**dadurch gekennzeichnet,**
**dass** es eine Scheibe (94) bildet, die an mindestens einer ihrer Seiten Keramikelemente (102) aufweist.

17. Führungsorgan nach einem der vorherigen Ansprüche,
**dadurch gekennzeichnet,**
**dass** die Halterung (20) der Keramikelemente auch eine insbesondere axiale Dichtigkeit zu dem bewegbaren Teil oder der Halterungsvorrichtung gewährleistet, und zwar entweder direkt durch Zusammenwirken von Formen oder indirekt über eine Dichtung.

18. Führungsorgan nach einem der vorherigen Ansprüche,
**dadurch gekennzeichnet,**
**dass** es ein Führungslager (88) zum Führen einer Schaufel mit variabler Winkelversetzung in einem Turbotriebwerk in ihrer Drehbewegung bildet.

19. Führungsorgan nach einem der Ansprüche 1 bis 10, 12 und 13,
**dadurch gekennzeichnet,**
**dass** es ein Kugelgelenk (116) zur Führung eines Teils in Drehbewegung bildet, wobei diese Führung durch Keramikelemente (110) gewährleistet wird, die eine kugelförmige Oberfläche bilden.
